# FASCICULE DE BREVET EUROPEEN

(11) **EP 3 237 471 B1**
(45) Date de publication et mention de la délivrance du brevet: **08.04.2020**
(21) Numéro de dépôt: 15823704.0
(22) Date de dépôt: 22.12.2015
(51) Int. Cl.: C08F 220/10, C09D 4/06, C08K 3/00, C08K 5/00, C09D 133/06, C08L 33/06

(54) **SIROP (METH) ACRYLIQUE LIQUIDE, PROCÉDÉ D'IMPRÉGNATION D'UN SUBSTRAT FIBREUX PAR LEDIT SIROP, ET MATÉRIAU COMPOSITE OBTENU APRÈS POLYMÉRISATION DUDIT SIROP D'IMPRÉGNATION**
FLÜSSIGER (METH)ACRYL-SIRUP, VERFAHREN ZUM IMPRÄGNIEREN EINES FASERSUBSTRATS MIT BESAGTEM SIRUP UND NACH DER POLYMERISIERUNG DES BESAGTEN VORIMPRÄGNIERTEN SIRUPS HERGESTELLTES VERBUNDSTOFFMATERIAL
LIQUID (METH)ACRYLIC SYRUP, METHOD FOR IMPREGNATING A FIBROUS SUBSTRATE WITH SAID SYRUP, AND COMPOSITE MATERIAL PRODUCED AFTER POLYMERISATION OF SAID IMPREGNATION SYRUP

(30) Priorité: 22.12.2014 FR 1463056
(43) Date de publication de la demande: 01.11.2017
(73) Titulaire: Arkema France, 92700 Colombes (FR)
(72) Inventeur: GERARD, Pierre, 64230 Denguin (FR); TAILLEMITE, Sébastien, 92370 Chaville (FR); CALIN, Daniel, 64230 Caubios-Loos (FR)
(74) Mandataire: Senff, Holger
(86) Numéro de dépôt international: PCT/FR2015/053725
(87) Numéro de publication internationale: WO 2016/102890

(56) Documents cités:
- WO-A1-2014/013028
- WO-A1-2014/174098
- CN-A- 102 558 728
- GB-A- 924 459
- JP-A- S5 968 336
- US-A- 3 238 274
- US-A- 3 476 723
- US-A1- 2008 295 959
- US-A1- 2012 005 983

## Description

### [Domaine de l'invention]

L'invention selon les revendications 1 à 15 concerne un sirop (méth)acrylique liquide visqueux, un procédé d'imprégnation d'un substrat fibreux avec ledit sirop, un procédé pour polymériser ledit sirop et un matériau composite obtenu après polymérisation dudit substrat pré-imprégné avec ledit sirop.

En particulier, la présente invention concerne un sirop (méth)acrylique liquide visqueux comprenant principalement des composants méthacryliques ou acryliques, un amorceur pour démarrer la polymérisation à basse température et un accélérateur. L'invention concerne en outre un procédé industriel d'imprégnation d'un substrat fibreux ou de fibres longues avec un tel sirop liquide visqueux. L'invention concerne enfin un procédé de fabrication de pièces composites tridimensionnelles ou objets mécaniques ou structurés par imprégnation d'un substrat fibreux avec un tel sirop (méth)acrylique liquide visqueux puis polymérisation dudit sirop liquide. De telles pièces composites tridimensionnelles sont destinées à être utilisées dans des domaines variés tels que l'aéronautique, l'automobile, la construction, ou encore le transport ferroviaire par exemple.

### [Art Antérieur]

Les pièces mécaniques qui doivent tenir des contraintes élevées pendant leur utilisation, sont largement fabriquées à partir de matériaux composites. Un matériau composite est une combinaison macroscopique de deux matériaux non miscibles ou plus. Le matériau composite est constitué par au moins un matériau qui forme la matrice, c'est-à-dire une phase continue assurant la cohésion de la structure, et un matériau de renfort.

L'objectif, lors de l'utilisation d'un matériau composite, est d'obtenir des performances qui ne sont pas disponibles avec chacun de ses constituants lorsqu'ils sont utilisés séparément. Par conséquent, des matériaux composites sont largement utilisés dans plusieurs secteurs industriels tels que par exemple la construction, l'automobile, l'aérospatial, les transports, les loisirs, l'électronique et le sport, notamment en raison de leurs meilleures performances mécaniques (résistance à la traction supérieure, module de traction supérieur, ténacité à la rupture supérieure) et de leur faible densité, en comparaison des matériaux homogènes.

La classe la plus importante, au regard du volume à l'échelle industrielle commerciale, est celle des composites à matrices organiques, dans lesquels le matériau de matrice est généralement un polymère. La matrice d'un matériau composite polymère est soit un polymère thermoplastique, soit un polymère thermodurcissable.

Les polymères thermodurcissables consistent en des structures tridimensionnelles réticulées. La réticulation est obtenue par cuisson de groupes réactifs dans un pré-polymère. La cuisson peut par exemple être obtenue par chauffage des chaînes polymères afin de réticuler et de durcir le matériau de manière permanente. Afin de préparer le matériau composite polymère, le pré-polymère est mélangé avec l'autre composant, tel que des billes ou fibres de verre, ou l'autre composant est mouillé ou imprégné et cuit ultérieurement. Des exemples de prépolymères ou de matériau de matrice pour polymères thermodurcissables sont les polyesters insaturés, les esters de vinyle, les matériaux époxy ou phénoliques.

Un inconvénient majeur d'une matrice polymère thermodurcissable est sa réticulation. La matrice ne peut pas facilement être façonnée en d'autres formes. Une fois le polymère réticulé, la forme est fixée. Ceci rend également difficile le recyclage du matériau composite thermodurcissable et des pièces ou articles mécaniques ou structurés fabriqués, comprenant ledit matériau composite thermodurcissable, sont brûlés dans une cimenterie ou jetés dans une décharge. Un autre inconvénient majeur de l'ensemble des matrices thermodurcissables est leur fragilité.

Pour permettre le thermoformage et le recyclage, on préfère utiliser les polymères thermoplastiques.

Les polymères thermoplastiques consistent en des polymères linéaires ou ramifiés qui ne sont pas réticulés ou fortement réticulés. Les polymères thermoplastiques sont chauffés afin de mélanger les constituants nécessaires pour la fabrication du matériau composite et sont refroidis pour figer la forme finale. Le problème de ces polymères thermoplastiques fondus est leur viscosité très importante. Afin de préparer un matériau composite polymère à base de polymère thermoplastique, une résine polymère thermoplastique, communément appelée « sirop », est utilisée pour imprégner le matériau de renfort, par exemple un substrat fibreux. Une fois polymérisé, le sirop polymère thermoplastique constitue la matrice du matériau composite. Au moment de l'imprégnation, la viscosité du sirop d'imprégnation doit être maitrisée et adaptée pour ne pas être trop fluide ou trop visqueuse, de manière à imprégner correctement chaque fibre du substrat fibreux. Lorsque le mouillage est partiel, selon que le sirop est trop fluide ou trop visqueux, il apparait respectivement des zones « à nu », c'est-à-dire non imprégnées, et des zones où il se forme des gouttes de polymère sur les fibres qui sont à l'origine de la création de bulles. Ces zones « à nu » et ces bulles engendrent l'apparition de défauts dans le matériau composite final qui sont à l'origine, entre autre, d'une perte de résistance mécanique du matériau composite final.

Des objets moulés peuvent être obtenus par injection d'un sirop liquide dans un moule puis polymérisation de ce sirop liquide comprenant un monomère et un amorceur pour démarrer ou initier la polymérisation. Il existe des amorceurs ou des systèmes amorceurs qui sont activés par la chaleur, c'est-à-dire que le moule est chauffé pour démarrer la polymérisation. Il existe également des applications où le « durcissement à froid » est nécessaire ou souhaité, un accélérateur étant usuellement ajouté au sirop liquide. « Durcissement à froid » signifie que la polymérisation a lieu ou peut démarrer à température ambiante, c'est-à-dire à moins de 40°C. Le moule ne doit pas nécessairement être chauffé, mais pourrait être chauffé en plus en vue d'accélérer la cinétique.

Une fois que tous les composés nécessaires pour la polymérisation sont réunis sous forme d'un sirop liquide : le monomère, l'amorceur et l'accélérateur, le système est actif et la polymérisation démarrera inévitablement après un certain laps de temps. Ce laps de temps est en général inférieur à 30 minutes. Ceci signifie que le sirop liquide doit être utilisé quasiment immédiatement ; il présente une durée de vie en pot très limitée.

Par conséquent, les composés nécessaires pour la polymérisation, c'est-à-dire le monomère, l'amorceur et l'accélérateur ne sont mélangés ensemble sous forme d'un sirop liquide que quelques instants juste avant l'injection. Ceci est réalisé en utilisant une machine d'injection à 2 composants, avec une tête de mélange, juste avant la tête d'injection. Le premier composant peut comprendre le monomère ou les monomères et l'accélérateur alors que le deuxième composant comprend l'amorceur qui pourrait être aussi mélangé avec le monomère ou les monomères. Le démarrage prématuré de la polymérisation est ainsi évité.

En général, pour la polymérisation d'un sirop à base de composés méthacryliques ou acryliques, le premier composant comprend un mélange de polymère méthacrylique, de monomère méthacrylique et d'une amine tertiaire. Le deuxième composant, comprenant le système amorceur, est en général un produit solide. Il est utilisé sous forme d'une poudre, par exemple le peroxyde de benzoyle (noté BPO par la suite). On tente de mélanger le peroxyde de benzoyle (BPO) avec le monomère. La solubilisation de la poudre de peroxyde dans le monomère est souvent incomplète, la poudre non solubilisée peut alors sédimenter, ce qui entraine l'obtention d'une solution non homogène. Un autre problème des amorceurs solides qui ne sont pas correctement solubilisés réside dans le fait que leur accumulation dans les tuyaux d'une machine d'injection peut provoquer une obstruction des lignes d'alimentation de la machine, entrainant son blocage et son immobilisation pour nettoyage, voire sa casse.

Une première solution peut consister à solubiliser l'amorceur dans un solvant tel que l'acétone, l'éthanol ou un phtalate par exemple, mais cela engendre des coûts élevés et la présence d'un solvant n'est pas souhaitable dans les procédés de fabrication de tels matériaux composites. De plus, le taux de solvant nécessaire pour solubiliser l'amorceur est en général trop élevé et incompatible avec le ratio (monomère (méth)acrylique / amorceur) des machines. C'est notamment le cas avec le peroxyde de benzoyle (BPO) pour lequel la teneur en amorceur ne doit pas dépasser 5% en poids du sirop.

Une solution alternative consiste à utiliser un peroxyde liquide qui permet d'amorcer la polymérisation du sirop dans des cinétiques comparables à celles des systèmes amorceurs à base de BPO solide. Ainsi, la réaction de polymérisation des résines thermodurcissables de polyesters insaturés par exemple, peut être amorcée de manière radicalaire avec un peroxyde de méthyléthylcétone (PMEC) ou un hydroperxoyde (HP) liquide en solution. La réaction de polymérisation à température ambiante est alors accélérée grâce à l'incorporation d'un sel de cobalt, tel que l'Octoate de Cobalt ou le Naphténate de Cobalt par exemple. Cependant ce système, comprenant un amorceur se présentant sous forme d'un peroxyde liquide et un accélérateur se présentant sous forme d'un sel métallique à base de cobalt, ne permet pas la polymérisation de monomères vinyliques thermoplastiques de types acrylate ou méthacrylates car la dégradation du peroxyde liquide génère de l'oxygène dans le milieu, qui inhibe alors la polymérisation des méthacrylates. D'autre part, l'énergie d'activation des méthacrylates n'est pas atteinte avec les peoxydes de méthyléthylcétone (PMEC).

Une solution à ce problème peut alors consister à ajouter du styrène en plus des monomères (méth)acryliques mais cela pose des problèmes environnementaux, de sécurité et de vieillissement prématuré aux rayonnements ultra-violets.

Une autre solution peut consister à ajouter des aldéhydes. Ainsi, le document WO2003/008463 décrit un procédé pour polymériser des monomères de vinyle et/ou des oligomères comprenant au moins un radical vinyle. A cette fin, le monomère vinylique est mélangé avec au moins un agent fournissant du dioxygène, au moins un aldéhyde et au moins un accélérateur. Cependant, l'aldéhyde ou les aldéhydes sont ajoutés en trop grande quantité, ce qui peut nuire aux propriétés mécaniques de la pièce composite finale obtenue à partir d'un matériau fibreux imprégné avec le sirop et polymérisé. De plus, cette solution ne permet pas non plus de conserver des dosages typiques en amorceur, qui sont classiquement inférieurs à 5% en poids du sirop, car l'aldéhyde n'étant pas stable dans le sirop de monomère, elle est à rajouter avec l'amorceur. Enfin, ces systèmes peuvent être accélérés par l'incorporation d'un sel de cobalt. Or le cobalt est une substance classée toxique que la demanderesse cherche donc à éviter.

Il existe aussi des documents décrivant des formulations bi-composant pour des applications dentaires par exemple, qui nécessitent un système polymérisant en milieu humide. Ainsi, le document US 2012/0059083 décrit une formulation bi-composant dont un premier composant A comprend des monomères méthacryliques multifonctionnels et oligomères, des charges et de l'hydroperoxyde de cumène et dont un deuxième composant B comprend des monomères méthacryliques multifonctionnels et oligomères, des charges, un composé réducteur de la famille des thiourées et un sel de vanadium. Cependant, il a été vérifié, notamment sur un mélange de 1,4-butanediol diméthacrylate et d'oligomère époxy-méthacrylate, que les sirops (méth)acryliques liquides visqueux, comprenant principalement des composants méthacryliques ou acryliques monofonctionnels, sont beaucoup moins réactifs que les mélanges de monomères (méth)acryliques multifonctionnels et d'oligomères qui sont connus pour accélérer la réaction de polymérisation. De plus, la viscosité de la formulation décrite dans ce document semble être élevée, ce qui peut également contribuer à l'accélération de la réactivité de la composition. Or, on cherche à réaliser un sirop dont la viscosité n'est pas trop élevée, afin de permettre une imprégnation complète et correcte des fibres d'un substrat fibreux.

Le document EP 1997862 décrit une formulation comprenant des uréthanes-acrylates, des charges et un acétonate de vanadium. Les uréthanes-acrylates sont connus pour être des composés beaucoup plus réactifs que les monomères méthacryliques mono-fonctionnels. De plus, la viscosité de la formulation décrite dans ce document est comprise entre 1000 et 10000mPa*s. Cette formulation ne permet pas d'obtenir une polymérisation rapide avec des sirops moins visqueux à base de monomères mono-fonctionnels.

Le document US 4,083,890 décrit un système comprenant une résine thermodurcissable à base de polyester insaturé (ou d'ester vinylique), un hydroperoxyde et du vanadium dans des proportions comprises entre 0,002 et 1% de métal. L'ajout d'un peroxyde cétonique permet de retarder le gel. Le vanadium décrit est une solution de vanadium neodecanoate à 6% en métal de vanadium ou un accélérateur Nouryact VN-2 de la société AkzoNobel (vanadium monobutyldihydrophosphite dans du monobutyl dihydrophosphite). Toutes les résines sont dans le styrène ou le chlorostyrène. Or, les carboxylates de vanadium ou le vanadium monobutyldihydrophosphite ne permettent pas d'obtenir de polymérisation rapide de sirops (méth)acryliques à base de monomères mono-fonctionnels. Ceci est probablement dû à la réactivité des monomères vinyliques aromatiques et des oligomères de polyester insaturé qui est très supérieure à celle des monomères (méth)acryliques mono-fonctionnels seuls.

Le document WO 2014/013028 décrit un sirop (méth)acrylique comprenant un polymère (méth)acrylique, un monomère (méth)acrylique et un amorceur pour démarrer la polymérisation du monomère (méth)acrylique, ledit amorceur se présentant sous la forme d'un composé peroxyde liquide. En option il comprend en outre une amine tertiaire. Ce document ne décrit pas, et ne suggère pas davantage, l'utilisation d'un sel de vanadium en combinaison avec l'amine tertiaire pour accélérer la cinétique de polymérisation.

Le document WO 2014/174098 décrit un sirop (méth)acrylique comprenant un polymère (méth)acrylique, un monomère (méth)acrylique et un amorceur pour démarrer la polymérisation du monomère (méth)acrylique, ledit amorceur se présentant sous la forme d'un composé peroxyde liquide dans une plage de température comprise entre 0° et 50°C. Il comprend également au moins un aldéhyde organique, un peracide organique et un accélérateur à base de sel de métal de transition. Il cite des métaux comme le Mn, le Co, le Fe ou le Cu, mais il ne précise pas, cependant, que le métal de transition peut être le vanadium. Ce document ne décrit pas, non plus, l'utilisation d'une amine tertiaire en combinaison avec un sel de vanadium pour accélérer la cinétique de polymérisation.

Le document US 3,476,723 décrit un sirop de monomère d'alkylméthacrylate et de polymère de méthylméthacrylate, un peroxyde de benzoyl comme amorceur, un accélérateur à base de vanadium et d'une aldéhyde aliphatique comprenant 1 - 18 atomes de carbone dans la molécule. Ce document présente le système accélérateur à base de vanadium et d'aldéhyde comme avantageux par rapport à l'utilisation d'une amine tertiaire utilisée dans l'art antérieur, car une fois polymérisés les polymères obtenus ne décolorent pas sous l'effet des rayons du soleil. Ce document ne décrit pas, et ne suggère pas davantage, l'utilisation d'une amine tertiaire en combinaison avec un sel de vanadium pour accélérer la cinétique de polymérisation.

Enfin, le document US 3,238,274 décrit un système de résine thermodurcissable à base de polyester insaturé, d'un oxyde et/ou carboxylate de vanadium, d'un mono- ou dialkyl phosphate et d'un hydroperoxyde. Le taux de vanadium peut être très bas (inférieur à 0,02% de métal). Cependant avec des sirops thermoplastiques à base de monomère (méth)acryliques mono-fonctionnels, ces sels de vanadium ne permettent pas l'obtention d'une polymérisation rapide, comparables aux temps de gel décrits dans ce document, car la réactivité intrinsèque des résines de polyester insaturé et du styrène est bien supérieure à la réactivité des monomères (méth)acryliques mono-fonctionnels à la base du sirop selon l'invention. JP S59 68336, WO 2014/013028, WO 2014/174098 décrivent des autres compositions d'imprégnation de fibres.

US 3 476 723, GB 924 459 et CN 102 558 728 décrivent des sels de vanadium utilisés comme accélérateurs de polymérisation.

L'art antérieur ne décrit pas de sirop (méth)acrylique liquide stable, apte à être polymérisé à température ambiante au moyen d'un amorceur liquide, qui puisse être utilisé facilement dans toutes les machines d'injection existantes sans en obstruer leurs lignes d'alimentation.

L'art antérieur ne décrit pas non plus de sirop (méth)acrylique qui permette d'obtenir, après imprégnation d'un substrat fibreux par ledit sirop puis polymérisation dudit sirop, des pièces composites dont les propriétés mécaniques ne sont pas dégradées.

L'art antérieur ne décrit pas non plus de solution compatible avec un procédé industriel d'imprégnation d'un substrat fibreux, selon lequel la polymérisation du sirop (méth)acrylique d'imprégnation se fait « à froid » en moins de 30 minutes, et de manière préférentielle en moins de 20 minutes.

### [Problème technique]

L'invention a donc pour but de remédier aux inconvénients de l'art antérieur en proposant un sirop (méth)acrylique liquide visqueux qui soit stable, facile d'emploi, pouvant être utilisé sur n'importe quelle machine d'injection de procédé RTM ou d'infusion existante sans en obstruer ses lignes d'alimentation, dont la polymérisation est compatible avec des procédés industriels d'imprégnation de substrat fibreux et de fabrication de pièces composites.

Selon un autre objectif de la présente invention le sirop (méth)acrylique liquide visqueux est destiné à l'imprégnation ou au moulage par injection et peut être facilement préparé dans un système à un ou deux composant(s) et mélangé de manière homogène avant l'injection ou l'imprégnation.

Un autre objectif de la présente invention est de proposer un procédé d'imprégnation d'un substrat fibreux avec un tel sirop (méth)acrylique liquide visqueux de manière à mouiller complètement, correctement et de manière homogène le substrat fibreux pendant l'imprégnation, de manière à ne pas dégrader les performances mécaniques de la pièce composite obtenue après polymérisation.

Encore un autre objectif de la présente invention est de fabriquer une pièce composite tridimensionnelle ou une pièce mécanique ou structurée comprenant un matériau composite thermoplastique et présentant des propriétés mécaniques satisfaisantes, telles qu'une rigidité élevée et un module d'Young d'au moins 15 GPa.

### [Brève description de l'invention]

De manière surprenante, la demanderesse a découvert qu'un sirop (méth)acrylique liquide visqueux selon les revendications 1 à 6 est homogène et apte à être utilisé sur des machines d'injection existantes sans obstruction de ses lignes d'alimentation, présente une durée de polymérisation compatible avec les procédés industriels d'imprégnation de substrats fibreux et de fabrication de pièces composites, et permet une imprégnation complète et correcte d'un substrat fibreux.

De manière surprenante, la demanderesse a également découvert qu'une utilisation selon la revendication 7 de ce sirop (méth)acrylique pour l'imprégnation d'un substrat fibreux, ledit substrat fibreux étant constitué de fibres longues, permet l'obtention d'une imprégnation complète et correcte du substrat fibreux.

De même la demanderesse a découvert qu'un procédé d'imprégnation selon les revendications 9 et 10 pour l'imprégnation d'un substrat fibreux, ledit substrat fibreux étant constitué de fibres longues et ledit procédé étant caractérisé en ce qu'il comprend une étape d'imprégnation dudit substrat fibreux par un sirop liquide (méth) acrylique: permet l'obtention d'une imprégnation complète et correcte du substrat fibreux.

Etonnamment, il a en outre été découvert qu'un procédé pour polymériser selon la revendication 8 un tel sirop (méth)acrylique liquide visqueux, ledit sirop étant un système bi-composant comprenant un premier composant résultant d'un mélange des composés a), b), d), e) et un deuxième composant comprenant le composé amorceur c), ledit procédé consistant à mélanger les premier et deuxième composant du système bi-composant moins de 10 minutes avant l'injection dans un moule ou l'imprégnation d'un substrat fibreux, permet d'obtenir une polymérisation rapide « à froid » compatible avec les procédés industriels de fabrication de pièces mécaniques et permet d'obtenir des pièces mécaniques ou structurées présentant des propriétés mécaniques satisfaisantes.

Étonnamment, il a en outre été découvert qu'un procédé de fabrication de pièces composites selon les revendications 11 à 13 comprenant les étapes suivantes :
a) l'imprégnation d'un substrat fibreux avec un tel sirop (méth)acrylique liquide visqueux,
b) la polymérisation du sirop (méth)acrylique liquide visqueux imprégnant ledit substrat fibreux,
permet d'obtenir des pièces mécaniques ou éléments structurés présentant des propriétés mécaniques satisfaisanteses.

### [Description détaillée de l'invention]

Le terme "substrat fibreux", tel qu'utilisé, se rapporte à des tissus, des feutres ou des non-tissés qui peuvent être sous la forme de bandes, de nappes, de tresses, de mèches ou de pièces.

Le terme "monomère vinylique", tel qu'utilisé, se rapporte à tous types de monomères qui comprennent une structure H₂C=CHR.

Le terme "(méth)acrylique", tel qu'utilisé, se rapporte à tous types de monomères acryliques et méthacryliques.

Le terme "PMMA", tel qu'utilisé, se rapporte à des homo- et copolymères de méthacrylate de méthyle (MMA), la proportion en poids de MMA dans le PMMA étant d'au moins 70 % en poids pour le copolymère de MMA.

Le terme "monomère", tel qu'utilisé, se rapporte à une molécule qui peut subir une polymérisation.

Le terme "monomère monofonctionnel", tel qu'utilisé, se rapporte à une molécule qui peut subir une polymérisation et qui comporte une seul fonction qui peut subir la polymérisation, préférablement une seul double liaison type C=C.

Le terme "polymérisation", tel qu'utilisé, se rapporte au procédé de conversion d'un monomère ou d'un mélange de monomères en un polymère.

Le terme "polymère thermoplastique", tel qu'utilisé, se rapporte à un polymère qui devient liquide ou qui devient plus liquide ou moins visqueux lorsqu'il est chauffé et qui peut prendre de nouvelles formes par l'application de chaleur et de pression.

Le terme "polymère thermodurcissable", tel qu'utilisé, se rapporte à un prépolymère à un état souple, solide ou visqueux qui se transforme de manière irréversible en un réseau polymère infusible et insoluble par durcissement.

Le terme "composite polymère", tel qu'utilisé, se rapporte à un matériau multicomposant comprenant plusieurs domaines de phase différents, dans lequel au moins un type de domaine de phase est une phase continue et dans lequel au moins un composant est un polymère.

Le terme « amorceur », tel qu'utilisé, se rapporte à une espèce chimique qui réagit avec un monomère pour former un composé intermédiaire capable de relier avec succès un grand nombre d'autres monomères en un composé polymère.

Le terme «peroxyde liquide », tel qu'utilisé, se rapporte à un peroxyde organique intrinsèquement liquide ou utilisé en tant que soluté dans un solvant et dont la viscosité dynamique est comprise entre 1 et 1000 mPa*s, de préférence entre 1 et 100 mPa*s à 25°C.

Le terme « accélérateur », tel qu'utilisé, se rapporte à un composé organo-soluble ajouté à une composition liquide pour accélérer la cinétique d'une réaction de polymérisation à température ambiante.

Le terme « système accélérateur », tel qu'utilisé, se rapporte à un système comprenant plusieurs composés organo-solubles qui, en association, sont capables d'accélérer la cinétique d'une réaction de polymérisation à température ambiante.

Selon un premier aspect, la présente invention concerne un sirop (méth)acrylique liquide visqueux, dont la viscosité dynamique est comprise dans une plage allant de 10mPa*s a 10000mPa*s a 25°C comprenant :
a) 10 a 60 parties en poids d'un polymère (meth)acrylique,
b) 40 a 90 parties en poids d'un monomère (meth)acrylique monofonctionnel,
c) 0,1 a 3 parties en poids d'un amorceur pour démarrer la polymérisation du monomère (meth)acrylique, ledit amorceur se présentant sous la forme d'un compose peroxyde liquide dans une plage de température comprise entre 0° et 50°C,
   ledit sirop étant caractérisé en ce que l'amorceur est combine avec un système accélérateur comprenant: d) moins de 1 parties en poids de vanadium, provenant d'un sel de vanadium et
e) 0,05 a 1 partie en poids d'une amine tertiaire,
au vu de la somme du monomère (meth)acrylique et du polymère (meth)acrylique, les deux ensemble représentant 100 parties en poids.

**En ce qui concerne le polymère (méth)acrylique,** celui-ci peut être choisi parmi les polyméthacrylates d'alkyle ou les polyacrylates d'alkyle. Selon un mode de réalisation préféré, le polymère (méth)acrylique est le polyméthacrylate de méthyle (PMMA). Il doit être dès lors entendu que polyméthacrylate de méthyle (PMMA) peut désigner un homopolymère de méthacrylate de méthyle (MMA) ou un copolymère de MMA ou leurs mélanges.

En particulier, il peut s'agir d'un mélange d'au moins deux homopolymères de MMA ayant un poids moléculaire différent, ou d'un mélange d'au moins deux copolymères de MMA ayant une composition en monomères identique et un poids moléculaire différent, ou d'un mélange d'au moins deux copolymères de MMA ayant une composition en monomères différente. Il peut également s'agir d'un mélange d'au moins un homopolymère de MMA et d'au moins un copolymère de MMA.

Selon un mode de réalisation, l'homo- ou le copolymère de méthacrylate de méthyle (MMA) comprend au moins 70 %, de préférence au moins 80 %, avantageusement au moins 90 % et plus avantageusement au moins 95 % en poids de méthacrylate de méthyle. Le copolymère de méthacrylate de méthyle (MMA) peut également comprendre de 0,3 à 30 % en poids d'au moins un monomère contenant au moins une insaturation éthylénique et étant apte à copolymériser avec le méthacrylate de méthyle. Parmi ces monomères on peut notamment citer : les acides acrylique et méthacrylique et les (méth)acrylates d'alkyle dans lesquels le groupe alkyle contient de 1 à 12 atomes de carbone. À titre d'exemple, on peut mentionner l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un mode de réalisation préféré, le copolymère de méthacrylate de méthyle (MMA) comprend de de 70% à 99,7% , de préférence de 80 % à 99,7 %, avantageusement de 90 % à 99,7 % et plus avantageusement de 90 % à 99,5 % en poids de méthacrylate de méthyle et de 0,3% à 30%, de préférence de 0,3 % à 20 %, avantageusement de 0,3 % à 10 % et plus avantageusement de 0,5 % à 10 % en poids d'au moins un monomère contenant au moins une insaturation éthylénique qui peut copolymériser avec le méthacrylate de méthyle. De préférence, le comonomère est choisi parmi l'acrylate de méthyle ou l'acrylate d'éthyle ou leurs mélanges.

Le poids moléculaire moyen en poids du polymère (méth)acrylique est généralement élevé, et peut être dès lors supérieur à 50 000 g/mol, de préférence supérieur à 100 000 g/mol. Le poids moléculaire moyen en poids peut être mesuré par chromatographie d'exclusion stérique (SEC).

**En ce qui concerne le, ou les, monomère(s) (méth)acrylique(s)** compris dans le sirop (méth)acrylique en plus du polymère (méth)acrylique, il(s) est (sont) choisi(s) parmi un monomère (méth)acrylique monofonctionnel.

En revanche le sirop ne comprend pas plus de 5 parties en poids de monomère vinylique aromatique. Un tel monomère vinylique aromatique peut par exemple être choisi parmi l'alpha-méthylstyrène, l'ortho-, le bêta- ou le para-méthylstyrène, le ter-butylstyrène, le nitrostyrène, et leurs mélanges. De préférence, un tel monomère vinylique aromatique n'est pas le styrène, et de manière encore plus préférée, le sirop ne comporte pas de monomère vinylique aromatique.

En outre, le sirop ne comprend pas plus de 5 parties en poids, préférablement pas plus de 3 parties en poids, plus préférablement pas plus de 1 partie en poids de monomères (méth)acryliques multifonctionnels, c'est-à-dire comportant plusieurs fonctions (méth)acrylates par monomère. De manière encore plus préférée, le sirop ne comprend pas de tels monomères (méth)acryliques multifonctionnels.

Le sirop peut en outre comprendre, parmi les monomères (méth)acryliques, des oligomères à fonctionnalité (méth)acrylates, tels que les epoxy-(méth)acrylates ou les urethane-(méth)acrylates ou les polyester-(méth)acrylates. De préférence, ces oligomères sont présents dans le sirop à hauteur d'au plus 5 parties en poids, préférablement d'au plus 3 parties en poids, plus préférablement d'au plus 1 partie en poids et de manière encore plus préférée le sirop n'en contient pas.

Le sirop comprend majoritairement de ou des monomères ou de ou des monomères (méth)acryliques monofonctionnel(s). Majoritairement veux dire que au moins 95% des monomères dans le sirop sont monofonctionnels, préférablement au moins 97%, plus préférablement au moins 98%, encore plus préférée au moins 99%, avantageusement au moins 99.5%, plus avantageusement 99.9% et de manière encore plus avantageux tous des monomères sont monofonctionnels.

De préférence, le ou les monomères (méth) acryliques est (sont) choisi(s) parmi l'acide acrylique, l'acide méthacrylique, les monomères acryliques d'alkyle, les monomères méthacryliques d'alkyle, le groupe alkyle pouvant être linéaire, ramifié ou cyclique et contenant de 1 à 22 atomes de carbone, de préférence de 1 à 12 atomes de carbone.

De préférence, le ou les monomères constitutifs du sirop (méth)acrylique est (sont) choisi(s) parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, l'acrylate de cyclohexyle, méthacrylate de cyclohexyle, l'acrylate d'isobornyle, le méthacrylate d'isobornyle, le méthacrylate d'heptyle, l'acrylate de n-octyle, l'acrylate de 2-octyle, l'acrylate d'iso-octyle, le méthacrylate de 2-éthylhexyle, le méthacrylate de butyldiglycol, le méthacrylate de dicyclopentényloxyéthyle, le méthacrylate d'éthoxyéthyle, le méthacrylate d'isobutyle, le méthacrylate de n-butyle, le méthacrylate de tert-butyle, le méthacrylate d'hydroxylpropyle, la N-vinylpyrrolidone et leurs mélanges.

Plus avantageusement, le monomère (méth)acrylique est choisi parmi le méthacrylate de méthyle, l'acrylate d'isobornyle ou l'acide acrylique et leurs mélanges.

Selon un mode de réalisation préféré, au moins 50 % en poids, de préférence au moins 60 % en poids du monomère (méth)acrylique ou des monomères (méth)acryliques est le méthacrylate de méthyle.

Selon un mode de réalisation davantage préféré, au moins 50 % en poids, de préférence au moins 60 % en poids, de manière davantage préférée au moins 70 % en poids et avantageusement au moins 80 % en poids et encore plus avantageusement 90 % en poids du monomère (méth)acrylique est un mélange de méthacrylate de méthyle avec de l'acrylate d'isobornyle et/ou de l'acide acrylique.

**En ce qui concerne l'amorceur pour** le démarrage de la polymérisation du monomère (méth)acrylique, c'est avantageusement un amorceur radicalaire.

De manière avantageuse, l'amorceur radicalaire est un perxoyde liquide dans une plage de température comprise entre 0°C et 50°C.

Le peroxyde liquide est un peroxyde organique comprenant 2 à 30 atomes de carbone, choisi parmi les hydroperoxydes, les perxoydes cétoniques ou les peroxyesters.

De préférence le peroxyde liquide est un hydroperoxyde choisi parmi le ter-butylhydroperoxyde, le monohydroperxoyde, le paraméthanehydroperoxyde, le ter-amylhydroperoxyde ou l'hydroperxoyde de cumène. De manière encore plus préférée, c'est le monohydroperoxyde ou le paraméthanehydroperoxyde ou l'hydroperoxyde de cumène.

Un tel amorceur, en se décomposant, génère des radicaux libres qui contribuent au démarrage de la réaction de polymérisation.

La quantité d'amorceur est avantageusement comprise entre 0,1 parties en poids et 5 parties en poids, de préférence entre 0,1 et 3 parties en poids et, de manière encore plus préférée entre 0,2 et 1 partie en poids au vu de la somme du monomère (méth)acrylique et du polymère (méth)acrylique, ces deux derniers représentant ensemble 100 parties en poids. Les quantités sont données au vu du sirop liquide (méth)acrylique injecté ou utilisé pour l'imprégnation.

**En ce qui concerne le système accélérateur,** celui-ci comprend avantageusement une combinaison une combinaison d'un sel de vanadium avec une amine tertiaire. Ainsi, toute utilisation de cobalt, métal classé comme toxique, est écartée.

Le système accélérateur est soluble dans le sirop à base de monomères (méth)acryliques, et permet d'entrainer une décomposition de l'amorceur de manière à générer les radicaux libres nécessaires au démarrage de la polymérisation. Le sel de Vanadium est un sel comprenant des ligands phosphorés, tels que les dialkyl phosphate ou les trialkyl phosphate, préférentiellement les dialkyl phosphates avec des chaines alkyles comprenant entre 2 et 20 atomes carbones.

Avantageusement, la teneur en vanadium (qui vient de sel de vanadium) dans le sirop est inférieure à 1 parties en poids, plus avantageusement elle est inférieure à 0.5 parties en poids, de préférence, elle est inférieure ou égale à 0.2 partie en poids et de manière encore plus préférée, elle est comprise entre 0,0005 et 0,1 partie en poids. Bien que les proportions en sel de vanadium dans le sirop soient très faibles, le système accélérateur est très réactif, grâce à l'action combinée de l'amine tertiaire.

Pour faciliter l'utilisation le sel de vanadium est dilué dans des solvants ou plastifiants pour avoir une viscosité adaptée pour l'utilisation.

L'utilisation d'une amine tertiaire bien choisie, dans des proportions adéquates, permet de polymériser le sirop (méth)acrylique en un temps court, typiquement inférieur à 30 minutes et de préférence inférieur à 20 minutes, compatible avec la production de pièces composites, en utilisant des machines standard d'injection. Il a notamment été découvert qu'une même amine peut à la fois accélérer ou ralentir la réaction de polymérisation, en fonction de son taux dans le sirop (méth)acrylique.

De manière avantageuse, pour pouvoir obtenir une cinétique de polymérisation rapide, c'est-à-dire un temps de polymérisation inférieur à 30 minutes et de préférence inférieur à 20 minutes, la teneur en amine tertiaire dans le sirop (méht)acrylique doit être avantageusement comprise entre 0.05 partie en poids et 1 partie en poids, préférentiellement entre 0.1 et 0.8 partie en poids et plus préférentiellement entre 0.2 et 0.6 partie en poids. De telles proportions en amine tertiaire permettent d'atteindre des cinétiques satisfaisantes.

L'amine tertiaire est avantageusement choisie parmi la N,N-diméthyle-p-toluidine (DMPT), la N,N-dihydroxyéthyl-p-toluidine (DHEPT), la N,N-diéthyl-p-toluidine (DEPT), ou la para-toluidine ethoxylate (PTE).

Tous les composants du sirop (amorceur, système accélérateur) pris séparément sont stables plusieurs mois. Ils sont liquides et se solubilisent bien dans le monomère (méth)acrylique de manière à former un sirop (méth)acrylique homogène..

Le fait d'utiliser à la fois un amorceur liquide et un système accélérateur liquide, ils se solubilisent bien dans le monomère (méth)acrylique de manière à former un sirop (méth)acrylique homogène. L'amorceur est facile d'emploi, il est stable et industrialisable.

L'amorceur étant liquide, il n'obstrue pas les lignes d'alimentation de la machine d'injection utilisée pour la mise en œuvre du procédé d'imprégnation du substrat fibreux et/ou du procédé de fabrication de pièces mécaniques ou d'éléments structurés ou d'articles en matériau composite selon l'invention et ceci, même avant d'être mélangé avec le mélange de monomère(s) (méth)acrylique(s), de polymère(s) (méth)acrylique(s) et du système accélérateur.

De même, l'amorceur étant soluble dans le sirop, après mélange de l'amorceur avec le mélange de monomère(s) (méth)acrylique(s), de polymère(s) (méth)acrylique(s), et du système accélérateur, le sirop liquide (méth)acrylique n'obstrue pas les lignes d'alimentation de la machine d'injection utilisée pour la mise en œuvre du procédé d'imprégnation du substrat fibreux et/ou du procédé de fabrication de pièces mécaniques ou d'éléments structurés ou d'articles en matériau composite selon l'invention.

**En ce qui concerne le sirop liquide (méth)acrylique** selon l'invention, destiné à être utilisé pour imprégner un substrat fibreux par exemple, ledit substrat fibreux étant constitué de fibres longues, il comprend un monomère ou un mélange de monomères (méth)acryliques, au moins un polymère (méth)acrylique dissout dans le monomère un amorceur et le système accélérateur. Cette solution est couramment nommée "sirop" ou "prépolymère".

Avantageusement, le sirop monomère liquide ne contient pas de solvant ajouté volontairement supplémentaire.

Le polymère (méth)acrylique est complètement soluble dans le monomère (méth)acrylique.

Le polymère (méth)acrylique est le PMMA, c'est-à-dire l'homo- ou le copolymère de méthacrylate de méthyle (MMA) ou un mélange de ceux-ci tel que défini précédemment.

Le, ou les, monomère(s) (méth)acrylique(s) est (sont) le(s) même(s) que celui (ceux) défini(s) précédemment.

Le monomère (méth)acrylique ou les monomères (méth)acryliques du sirop (méth)acrylique liquide sont présents à hauteur d'au moins 40 % en poids, de préférence d'au moins 50 % en poids, avantageusement d'au moins 60 % en poids et plus avantageusement d'au moins 65 % en poids du sirop (méth)acrylique liquide total.

Le monomère (méth)acrylique ou les monomères (méth)acryliques du sirop (méth)acrylique liquide sont présents à hauteur d'au plus 90 % en poids, de préférence d'au plus 85 % en poids et plus avantageusement d'au plus 80 % en poids du sirop (méth)acrylique liquide total.

Le ou les polymères (méth) acryliques dans le sirop liquide (méth)acrylique représentent au moins 10 % en poids, de préférence au moins 15 % et plus avantageusement au moins 20 % en poids du poids total du sirop liquide (méth)acrylique.

Le ou les polymères (méth) acryliques dans le sirop liquide (méth)acrylique représentent au plus 60 % en poids, de préférence au plus 50 %, avantageusement au plus 40 % et plus avantageusement au plus 35 % en poids du poids total du sirop liquide (méth)acrylique.

De préférence, le sirop (méth)acrylique liquide visqueux comprend :
a) 10 à 60 parties en poids de polymère (méth)acrylique,
b) 40 à 90 parties en poids de monomère (méth)acrylique,
c) de 0,1 à 1 partie en poids d'amorceur,
d) moins de 0,5 partie en poids, de manière plus préférée moins de 0,2 partie en poids, et de manière encore plus préférée entre 0,0005 et 0,1 partie en poids de vanadium, provenant du sel de vanadium et
e) de 0,1 à 0,8 partie en poids et de manière encore plus préférée de 0,2 à 0,6 parties en poids d'amine tertiaire,
f) au vu de la somme du monomère (méth) acrylique et du polymère (méth)acrylique, les deux ensemble représentant 100 parties en poids.

La viscosité dynamique du sirop (méth)acrylique liquide est comprise dans une plage allant de 10 mPa*s à 10 000 mPa*s, de préférence de 10 mPa*s à 5 000 mPa*s et de manière plus préféré de 50 mPa*s à 5 000 mPa*s et avantageusement de 100 mPa*s à 1 000 mPa*s et plus avantageusement de 100 mPa*s à 500 mPa*s. La viscosité du sirop peut facilement être mesurée avec un rhéomètre ou un viscosimètre. La viscosité dynamique est mesurée à 25°C. Le sirop (méth)acrylique liquide a un comportement newtonien, ce qui signifie qu'il ne présente pas de fluidification sous cisaillement, la viscosité dynamique étant ainsi indépendante du cisaillement dans un rhéomètre ou de la vitesse du mobile dans un viscosimètre.

Si la viscosité du sirop (méth)acrylique liquide à une température donnée est trop élevée pour le procédé d'imprégnation et pour l'imprégnation correcte, il est possible de chauffer le sirop afin d'obtenir un sirop plus liquide dans les limites de l'intervalle de viscosité dynamique mentionné précédemment à la température respective à laquelle l'imprégnation a lieu pour le mouillage suffisant et l'imprégnation correcte et complète du substrat fibreux.

Le sirop liquide (méth)acrylique selon l'invention peut donc être utilisé sur toutes les machines d'injections existantes pour procédé de moulage par transfert de résine (RTM) ou d'infusion.

L'amorceur liquide permet une polymérisation du monomère (méth)acrylique avec des temps de cycle courts.

Les quantités d'amorceur et du système accélérateur étant relativement faibles (inférieures à 5 parties en poids), les propriétés mécaniques du matériau composite ne s'en trouvent pas dégradées.

Le sirop n'utilisant pas ou très peu de monomères vinyliques aromatiques, il ne dégrade pas la résistance aux rayonnements Ultra-Violet du matériau composite obtenu.

La réactivité du sirop liquide (méth)acrylique selon l'invention est moins sensible aux variations de température dans les ateliers, que les sirops de l'art antérieur, ce qui permet de conserver des temps de cycles comparables toute l'année.

Le sirop (méth)acrylique liquide peut également comprendre d'autres additifs et charges. Une charge dans le cadre de la présente invention n'est pas considérée comme un additif. Tous les additifs et toutes les charges peuvent être ajoutés au sirop (méth)acrylique liquide avant l'imprégnation.

En tant qu'additifs, on peut mentionner les additifs organiques tels que les modifiants chocs ou les copolymères séquencés, les stabilisateurs thermiques, les stabilisateurs UV, les lubrifiants, les dispersants, les agents antimousse, les modifiants de rhéologie, les cires, les modifiants d'adhésion, les agents de démoulage et leurs mélanges.

Le modifiant choc est sous la forme de particules fines comprenant un noyau élastomère et au moins une enveloppe thermoplastique, la taille des particules étant généralement inférieure à 1 µm et avantageusement comprise entre 50 et 300 nm. Le modifiant choc est préparé par polymérisation en émulsion. La teneur en modificateur de la résistance au choc du sirop monomère liquide est de 0 à 50 % en poids, de préférence de 0 à 25 % en poids, et avantageusement de 0 à 20 % en poids.

En tant que charges, on peut mentionner les nanotubes de carbone ou les charges minérales, y compris les nanocharges minérales (TiO₂, silice), et les carbonates et les hydrates. La teneur des charges dans le sirop monomère liquide est de 0 % en poids à 60 % en poids.

**En ce qui concerne le substrat fibreux,** on peut mentionner les tissus, les feutres ou les non-tissés qui peuvent être sous la forme de bandes, de nappes, de tresses, de mèches ou de pièces. Le matériau fibreux peut avoir différentes formes et dimensions, monodimensionnelles, bidimensionnelles ou tridimensionnelles. Un substrat fibreux comprend un assemblage d'une ou de plusieurs fibres. Lorsque les fibres sont continues, leur assemblage forme des tissus.

La forme monodimensionnelle correspond à des fibres linéaires. Les fibres peuvent être discontinues ou continues. Les fibres peuvent être agencées de manière aléatoire ou sous la forme d'un filament continu en parallèle les unes aux autres. Une fibre est définie par son rapport de longueur, qui est le rapport entre la longueur et le diamètre de la fibre. Les fibres utilisées dans la présente invention sont des fibres longues ou des fibres continues. Les fibres ont un rapport de longueur d'au moins 1 000, de préférence d'au moins 1 500, de manière davantage préférée d'au moins 2 000, avantageusement d'au moins 3 000 et le plus avantageusement d'au moins 5 000.

La forme bidimensionnelle correspond à des nattes fibreuses ou des renforts non tissés ou des renforts tissés ou des mèches tissées ou des faisceaux de fibres, qui peuvent également être tressés. Même si ces formes bidimensionnelles ont une certaine épaisseur et par conséquent en principe une troisième dimension, elles sont considérées comme bidimensionnelles selon la présente invention.

La forme tridimensionnelle correspond par exemple à des nattes fibreuses ou des renforts non tissés ou des faisceaux de fibres ou leurs mélanges, empilés ou pliés, un assemblage de la forme bidimensionnelle dans la troisième dimension.

Le matériau fibreux peut être d'origine naturelle ou synthétique. En tant que matériau naturel, on peut mentionner les fibres végétales, les fibres de bois, les fibres animales ou les fibres minérales.

Des fibres naturelles sont par exemple le sisal, le jute, le chanvre, le lin, le coton, les fibres de noix de coco et les fibres de banane. Des fibres animales sont par exemple la laine ou les poils.

Comme matière synthétique, on peut mentionner des fibres polymères choisies parmi les fibres de polymères thermodurcissables, de polymères thermoplastiques ou leurs mélanges.

Les fibres polymères peuvent être constituées de polyamide (aliphatique ou aromatique), de polyester, d'alcool polyvinylique, de polyoléfines, de polyuréthanes, de polychlorure de vinyle, de polyéthylène, de polyesters insaturés, de résines époxy et d'esters de vinyle.

Les fibres minérales peuvent également être choisies parmi les fibres de verre, notamment de type E, R ou S2, les fibres de carbone, les fibres de bore ou les fibres de silice.

Le substrat fibreux de la présente invention est choisi parmi les fibres végétales, les fibres de bois, les fibres animales, les fibres minérales, les fibres polymères synthétiques, les fibres de verre, les fibres de carbone ou leurs mélanges. De préférence, le substrat fibreux est choisi parmi les fibres minérales.

Les fibres du matériau fibreux ont un diamètre compris entre 0,005 µm et 100 µm, de préférence entre 1 µm et 50 µm, plus préférablement entre 5 µm et 30 µm et avantageusement entre 10 µm et 25 µm.

De préférence, les fibres du matériau fibreux de la présente invention sont choisies parmi les fibres continues (ce qui signifie que le rapport de longueur ne s'applique pas comme pour les fibres longues) pour la forme monodimensionnelle, ou les fibres longues ou continues formant la forme bi- ou tridimensionnelle du substrat fibreux.

**Un aspect supplémentaire selon la présente invention est le procédé d'imprégnation,** pour l'imprégnation d'un substrat fibreux, ledit substrat fibreux étant constitué de fibres longues et ledit procédé étant caractérisé en ce qu'il comprend une étape d'imprégnation dudit substrat fibreux avec un sirop (méth)acrylique liquide comprenant
a) un polymère (méth)acrylique,
b) un monomère (méth)acrylique,
c) un amorceur pour démarrer la polymérisation du monomère (méth)acrylique, ledit amorceur se présentant sous la forme d'un composé peroxyde liquide dans une plage de température comprise entre 0° et 50°C,
l'amorceur étant combiné avec un système accélérateur comprenant:
d) un sel de vanadium et
e) une amine tertiaire.

**Un autre aspect supplémentaire selon la présente invention est un procédé pour polymériser** le sirop liquide visqueux (méth)acrylique selon l'invention, ledit sirop étant un système bi-composant comprenant un premier composant résultant d'un mélange des composés a), b), d), e) et un deuxième composant comprenant le composé amorceur c), ledit procédé consistant à mélanger les premier et deuxième composant du système bi-composant moins de 10 minutes avant l'injection dans un moule ou l'imprégnation d'un substrat fibreux.

**Un autre aspect de la présente invention est un procédé de fabrication de pièces ou d'articles mécaniques structurés,** caractérisé en ce qu'il comprend les étapes suivantes :
a) l'imprégnation d'un substrat fibreux avec le sirop (méth)acrylique liquide visqueux selon l'invention,
b) la polymérisation dudit sirop (méth)acrylique liquide imprégnant ledit substrat fibreux.

De la manière la plus avantageuse, le procédé de fabrication de pièces ou d'articles mécaniques ou structurés comprenant le matériau composite polymère est choisi parmi le moulage par transfert de résine ou l'infusion.

Tous ces procédés comprennent l'étape d'imprégnation du substrat fibreux avec le sirop liquide (méth)acrylique selon l'invention, avant l'étape de polymérisation dans un moule.

De préférence, l'imprégnation du substrat fibreux à l'étape a) est réalisée dans un moule fermé.

Avantageusement, l'étape a) et l'étape b) sont réalisées dans le même moule fermé.

Avantageusement, la température de la polymérisation à l'étape b) est inférieure à 120°C, de préférence inférieure à 80°C et plus préférablement inférieure à 40°C. La température de la polymérisation et la température de de début de la polymérisation, au pic la température pourrais être plus important.

L'utilisation du même moule évite le transfert du matériau après l'imprégnation.

Les pièces ou articles mécaniques ou structurels fabriqués ne contiennent pas de solvant supplémentaire ajouté volontairement, puisque le sirop ne contenait pas de solvant supplémentaire pour l'étape d'imprégnation.

**En ce qui concerne les pièces ou articles mécaniques structurés** fabriqués selon la présente invention, ils comprennent au moins 20 % en poids de substrat fibreux, de préférence au moins 40 % en poids de matériau fibreux, avantageusement au moins 50 % en poids de matériau fibreux et avantageusement au moins 55 % en poids de matériau fibreux, par rapport à la composition totale.

Les pièces ou articles mécaniques structurés fabriqués selon la présente invention comprennent au plus 99 % en poids de matériau fibreux, de préférence au plus 95 % en poids de matériau fibreux, avantageusement au plus 90 % en poids de matériau fibreux et avantageusement au plus 80 % en poids de matériau fibreux, par rapport à la composition totale.

Le procédé de fabrication de pièces ou d'articles mécaniques ou structurés selon l'invention permet un mouillage complet, correct et homogène du substrat fibreux pendant l'imprégnation. Le mouillage des fibres pendant l'imprégnation ne présente aucun défaut, par exemple dû à des bulles et des vides qui diminuent les performances mécaniques des parties ou articles mécaniques ou structurés fabriqués.

Les pièces ou articles mécaniques ou structurés fabriqués selon l'invention ne comprennent essentiellement pas de pores. "Pore" signifie un vide sphérique d'un diamètre d'au moins 1 µm ou plus ou un vide ellipsoïdal allongé sous la forme d'un oblat ayant un axe principal le plus petit d'au moins 0,5 µm ou plus. "Ne comprenant essentiellement pas de pores" signifie que les pores représentent moins de 1 % en volume, de préférence moins de 0,5 % en volume et plus préférablement moins de 0,2 % en volume du volume total des pièces ou articles mécaniques ou structurels fabriqués.

**Le moulage par transfert de résine** est un procédé utilisant un ensemble de moules à deux faces qui façonne les deux surfaces d'un matériau composite. La face inférieure est un moule rigide. La face supérieure peut être un moule rigide ou souple. Les moules souples peuvent être en matériaux composites, en silicone ou en films polymères extrudés tels que le nylon. Les deux faces s'assemblent pour former une cavité de moule. La caractéristique distinctive du moulage par transfert de résine est que le substrat fibreux est placé dans cette cavité et l'ensemble de moules est fermé avant l'introduction du sirop liquide (méth)acrylique. Le moulage par transfert de résine comprend de nombreuses variantes qui diffèrent au niveau de la mécanique d'introduction du sirop (méth)acrylique liquide dans le substrat fibreux dans la cavité du moule. Ces variations vont de l'infusion sous vide au moulage par transfert de résine assisté par un vide (VARTM de l'acronyme anglais « Vaccuum Assisted Resin Transfer Moulding »). Ce procédé peut être réalisé à température ambiante ou à température augmentée. "Température ambiante" signifie entre 10 °C et 50 °C. "Température augmentée" signifie jusqu'à 200 °C. Une température augmentée est de préférence comprise entre 50 °C et 160 °C.

**Dans le cas du procédé d'infusion,** le sirop liquide (méth)acrylique doit présenter la viscosité adaptée en ce qui concerne ce procédé de préparation du matériau composite polymère. Le sirop liquide (méth)acrylique est aspiré dans le substrat fibreux se trouvant dans un moule spécial par l'application d'un léger vide. Le substrat fibreux est infusé et complètement imprégné par le sirop liquide (méth)acrylique.

Un avantage de cette méthode est la grande quantité de matériau fibreux dans le composite.

**En ce qui concerne l'utilisation** des pièces tridimensionnelles ou des articles mécaniques ou structurés fabriqués selon l'invention, on peut mentionner les applications automobiles, les applications nautiques, les applications ferroviaires, le sport, les applications aéronautiques et aérospatiales, les applications photovoltaïques, les applications relatives aux ordinateurs, les applications relatives aux télécommunications et les applications éoliennes.

En particulier, la pièce mécanique ou structurelle tridimensionnelle est une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

### Exemples comparatifs

Exemple 1 (comparatif) : un sirop est préparé en dissolvant 25 parties en poids de PMMA dans 75 parties en poids de MMA qui est stabilisé dans du MEHQ (hydroquinonemonoméhtyléther). Aux 100 parties en poids de sirop, on ajoute 0,8 partie en poids de peroxyde de benzoyle (BPO-Luperox A75 d'Arkema) et 0,3 partie en poids de DEPT (N,N-diéthyl-para-toluidine). Le sirop présente une viscosité dynamique de 520mPa*s à 25°C. La poudre de BPO n'est pas complètement dissoute dans le sirop. Une fois que l'agitation est arrêtée, les particules solides sont toujours visibles et elles sédimentent dans le fond du récipient.

Le sirop est polymérisé dans un récipient d'un volume de 100ml à une température ambiante ou 25°C plus ou moins 1°C. La température est mesurée à l'aide d'un détecteur de température placé dans le sirop. Après 40 minutes, la température arrive au pic.

Exemple 2 (comparatif) : on prépare le même sirop de base basé sur du MMA et du PMMA comme dans l'exemple 1. A 100 parties en poids de sirop de MMA + PMMA, on ajoute 1 partie en poids de peroxyde de méthyléthylcétone (PMEC- Luperox K12 d'Arkema) qui est un produit liquide et 0,018 partie en poids d'octoate de cobalt (de Sigma Aldrich). Le sirop est transparent.

Le sirop est polymérisé dans un récipient d'un volume de 100 ml à une température ambiante de 25°C plus ou moins 1°C. La température est mesurée à l'aide d'un détecteur de température placé dans le sirop. La température arrive au pic après plus de 24 heures.

Exemple 3 (selon l'invention) : on prépare un sirop en dissolvant 23 parties en poids de PMMA dans 77 parties en poids de MMA qui est stabilisé dans du MEHQ (hydroquinonemonoméhtyléther). Aux 100 parties en poids de sirop de MMA + PMMA, on ajoute 1 partie en poids d'hydroperoxyde de cumène (CHP - Luperox CU80 d'Arkema) qui est un produit liquide, 0,9 partie en poids de PTE (N,N-diéthyl-p-toluidine -Bisomer PTE de la société GEO specialty chemicals) et 0,6 partie en poids de vanadium dibutyl phosphate dans du propylène glycol (VP0132 de OMG Borcher) qui contiennent 5% massique en vanadium . Le sirop est transparent.

Le sirop est polymérisé dans un récipient d'un volume de 100 ml à une température ambiante de 25°C plus ou moins 1°C. La température est mesurée à l'aide d'un détecteur de température placé dans le sirop. La température arrive au pic après seulement 10 minutes.

Exemple 4 (selon l'invention) : on prépare le même sirop de base basé sur du MMA et du PMMA comme dans l'exemple 3. A 100 parties en poids de sirop de MMA + PMMA, on ajoute 1 partie en poids d'hydroperoxyde de cumène (CHP - Luperox CU80 d'Arkema) qui est un produit liquide, 0,3 partie en poids de PTE (N,N-diéthyl-p-toluidine -Bisomer PTE de la société GEO specialty chemicals) et 0,2 partie en poids de vanadium dibutyl phosphate dans du propylène glycol (VP0132 de OMG Borcher) qui contiennent 5% massique en vanadium. Le sirop est transparent.

Le sirop est polymérisé dans un récipient d'un volume de 100 ml à une température ambiante de 25°C plus ou moins 1°C. La température est mesurée à l'aide d'un détecteur de température placé dans le sirop. La température arrive au pic après 15 minutes et la matrice polymérisée est transparente.

Exemple 5 (selon l'invention) : on prépare plusieurs sirops de base basés sur du MMA et du PMMA comme dans l'exemple 3. A 100 parties en poids de sirop de MMA + PMMA, on ajoute 1 partie en poids d'un hydroperoxyde liquide, du PTE (N,N-diéthyl-p-toluidine -Bisomer PTE de la société GEO specialty chemicals) dans des propotions qui varient d'un sirop à un autre, et 0.2 partie en poids de vanadium dibutyl phosphate dans du propylène glycol (VP0132 de OMG Borcher) qui contiennent 5% massique en vanadium.

Ainsi un premier sirop ne comprend pas d'amine, un deuxième sirop comprend 0,1 partie en poids de PTE, un troisième sirop comprend 0,2 partie en poids de PTE, un quatrième sirop comprend 0,3 partie en poids de PTE, un cinquième sirop comprend 0,4 partie en poids de PTE, un sixième sirop comprend 0,5 partie en poids de PTE, un septième sirop comprend 0,65 partie en poids de PTE et un huitième sirop comprend 0,8 partie en poids de PTE.

Chaque sirop est polymérisé dans un récipient d'un volume de 100 ml à une température ambiante de 25°C plus ou moins 1°C. La température est mesurée à l'aide d'un détecteur de température placé dans le sirop.

La durée pour atteindre le pic de température caractéristique de la polymérisation du monomère (méth)acrylique a été relevée pour chaque sirop et est inscrite dans le tableau I ci-dessous.

**Tableau I**

| **N° Sirop** | **Quantité de PTE (en parties en poids)** | **Temps au pic** |
|---|---|---|
| 1 | 0 | Pas de pic |
| 2 | 0,1 | 24 minutes |
| 3 | 0,2 | 17 minutes |
| 4 | 0,3 | 15 minutes |
| 5 | 0,4 | 14 minutes |
| 6 | 0,5 | 14 minutes |
| 7 | 0,65 | 14 minutes |
| 8 | 0,8 | 13 minutes |

Les résultats obtenus démontrent que la cinétique de polymérisation est très satisfaisante pour des proportions en amine tertiaire dans le sirop comprises entre 0,05 et 1 partie en poids, de préférence entre 0,1 et 0,8 partie en poids et de manière encore plus préférée entre 0,2 et 0,6 partie en poids.

Exemple 6 (selon l'invention) : on prépare plusieurs sirops de base basés sur du MMA et du PMMA comme dans l'exemple 3. A 100 parties en poids de sirop de MMA + PMMA, on ajoute 1 partie en poids d'un hydroperoxyde liquide, 0.3 partie en poids du PTE (N,N-diéthyl-p-toluidine -Bisomer PTE de la société GEO specialty chemicals), et de vanadium dibutyl phosphate dans du propylène glycol (VP0132 de OMG Borcher) qui contiennent 5% massique en vanadium dans des proportions qui varient d'un sirop à un autre.

Ainsi un premier sirop comprend 0,1 partie en poids de VP0132, un deuxième sirop comprend 0,2 partie en poids de VP0132, un troisième sirop comprend 0,3 partie en poids de VP0132, un quatrième sirop comprend 0,4 partie en poids de VP0132, un cinquième sirop comprend 0,5 partie en poids de VP0132, un sixième sirop comprend 0,8 partie en poids de VP0132 et un septième sirop comprend 1 partie en poids de VP0132.

Chaque sirop est polymérisé dans un récipient d'un volume de 100 ml à une température ambiante de 25°C plus ou moins 1°C. La température est mesurée à l'aide d'un détecteur de température placé dans le sirop.

La durée pour atteindre le pic de température caractéristique de la polymérisation du monomère (méth)acrylique a été relevée pour chaque sirop et est inscrite dans le tableau II ci-dessous.

**Tableau II**

| **N° Sirop** | **Quantité de VP0123 (en parties en poids)** | **Teneur en Va (en parties en poids** | **Temps au pic** |
|---|---|---|---|
| 1 | 0.1 | 0,005 | 21 minutes |
| 2 | 0,2 | 0,01 | 18 minutes |
| 3 | 0,3 | 0,015 | 13 minutes |
| 4 | 0,4 | 0,02 | 12 minutes |
| 5 | 0,5 | 0,025 | 15 minutes |
| 6 | 0,8 | 0,04 | 14 minutes |
| 7 | 1 | 0,05 | 14 minutes |

Les résultats obtenus démontrent que la cinétique de polymérisation est très satisfaisante pour des proportions en sel de vanadium, contenant 5% massique de vanadium, comprises entre 0,1 et 1 partie en poids, et correspondant à des teneurs en Vanadium comprises entre 0,005 et 0,05 partie en poids.

Le sirop (méth)acrylique selon l'invention présente l'avantage d'être stable dans le temps, de polymériser rapidement, de sorte qu'il est compatible avec les procédés industriels d'imprégnation et de fabrication de pièces composites tridimensionnelles, tout en comprenant des quantités faibles d'accélérateur et ce, sans utiliser de monomères multifonctionnels, ni de monomères vinyliques aromatiques, ni de sels de cobalt en tant qu'accélérateurs.

## Revendications

1. Sirop (méth)acrylique liquide visqueux, dont la viscosité dynamique est comprise dans une plage allant de 10mPa*s à 10000mPa*s à 25°C comprenant :
a) 10 à 60 parties en poids d'un polymère (méth)acrylique,
b) 40 à 90 parties en poids d'un monomère (méth)acrylique monofonctionnel,
c) 0,1 à 3 parties en poids d'un amorceur pour démarrer la polymérisation du monomère (méth)acrylique, ledit amorceur se présentant sous la forme d'un composé peroxyde liquide dans une plage de température comprise entre 0° et 50°C,
ledit sirop étant **caractérisé en ce que** l'amorceur est combiné avec un système accélérateur comprenant:
d) moins de 1 parties en poids de vanadium, provenant d'un sel de vanadium et
e) 0,05 à 1 partie en poids d'une amine tertiaire,
au vu de la somme du monomère (méth)acrylique et du polymère (méth)acrylique, les deux ensemble représentant 100 parties en poids.

2. Sirop (méth)acrylique selon la revendication 1, **caractérisé en ce que** le sel de Vanadium d) est un sel comprenant des ligands phosphorés, tels que les dialkyl phosphate ou les trialkyl phosphate, préférentiellement les dialkyl phosphates avec des chaines alkyles comprenant entre 2 et 20 atomes carbones.

3. Sirop (méth)acrylique selon la revendication 1, **caractérisé en ce que** l'amine tertiaire e) est choisie parmi parmi la N,N-diméthyle-p-toluidine (DMPT), la N,N-dihydroxyéthyl-p-toluidine (DHEPT), la N,N-diéthyl-p-toluidine (DEPT), la para-toluidine ethoxylate (PTE) .

4. Sirop (méth)acrylique selon l'une quelconque des revendications 1 à 3, **caractérisé en ce que** le composé c) peroxyde liquide est un peroxyde organique comprenant 2 à 30 atomes de carbone choisi parmi les hydroperoxydes, les perxoydes cétoniques ou les peroxyesters et de préférence le peroxyde liquide est un hydroperoxyde choisi parmi le ter-butylhydroperoxyde, le monohydroperxoyde, le paraméthanehydroperoxyde, le ter-amylhydroperoxyde ou l'hydroperxoyde de cumène.

5. Sirop (méth)acrylique selon l'une des revendications 1 à 4, **caractérisé en ce qu'**il comprend :
a) 10 à 60 parties en poids de polymère (méth)acrylique,
b) 40 à 90 parties en poids de monomère (méth)acrylique monofonctionnel,
c) 0,1 à 1 partie en poids d'amorceur,
d) moins de 0,5 partie en poids, de manière plus préférée moins de 0,2 partie en poids, et de manière encore plus préférée entre 0,0005 et 0,1 partie en poids de vanadium, provenant du sel de vanadium et
e) 0,1 à 0,8 partie en poids et de manière encore plus préférée de 0,2 à 0,6 parties en poids d'amine tertiaire,
au vu de la somme du monomère (méth)acrylique et du polymère (méth)acrylique, les deux ensemble représentant 100 parties en poids.

6. Sirop (méth)acrylique selon l'une quelconque des revendications précédentes, **caractérisé en ce qu'**il présente une viscosité dynamique d'une valeur comprise dans la plage de 10mPa*s à 10000mPa*s, de préférence de 50mPa*s à 5000mPa*s, avantageusement de 100mPa*s à 1000mPa*s et plus avantageusement de 100 mPa*s à 500 mPa*s.

7. Utilisation du sirop (méth)acrylique selon l'une des revendications 1 à 6, pour l'imprégnation d'un substrat fibreux, ledit substrat fibreux étant constitué de fibres longues, dont les fibres ont un rapport de longueur d'au moins 1 000.

8. Procédé pour polymériser un sirop (méth)acrylique liquide visqueux selon l'une quelconque des revendications 1 à 6, ledit sirop étant un système bi-composant comprenant un premier composant résultant d'un mélange des composés a), b), d), e), et un deuxième composant comprenant le composé amorceur c), ledit procédé consistant à mélanger les premier et deuxième composant du système bi-composant moins de 10 minutes avant l'injection dans un moule ou l'imprégnation d'un substrat fibreux.

9. Procédé d'imprégnation, destiné à imprégner un substrat fibreux, ledit substrat fibreux étant constitué de fibres longues, ledit procédé étant **caractérisé en ce qu'**il comprend une étape d'imprégnation dudit substrat fibreux par un sirop (méth)acrylique liquide visqueux comprenant :
a) 10 à 60 parties en poids d'un polymère (méth)acrylique,
b) 40 à 90 parties en poids d'un monomère (méth)acrylique monofonctionnel,
c) 0,1 à 3 parties en poids d'un amorceur pour démarrer la polymérisation du monomère (méth)acrylique, ledit amorceur se présentant sous la forme d'un composé peroxyde liquide dans une plage de température comprise entre 0° et 50°C,
l'amorceur étant combiné avec un système accélérateur comprenant:
d) moins de 1 partie en poids de vanadium, provenant d'un sel de Vanadium et
e) 0,05 à 1 partie en poids d'une amine tertiaire,
au vu de la somme du monomère (méth)acrylique et du polymère (méth)acrylique, les deux ensemble représentant 100 parties en poids.

10. Procédé d'imprégnation selon la revendication 9, **caractérisé en ce que** le sirop (méth)acrylique liquide visqueux comprend :
a) 10 à 60 parties en poids de polymère (méth)acrylique,
b) 40 à 90 parties en poids de monomère (méth)acrylique monofonctionnel,
c) 0,1 à 1 partie en poids d'amorceur,
d) moins de 0,5 partie en poids, de manière plus préférée moins de 0,2 partie en poids, et de manière encore plus préférée entre 0,0005 et 0,1 partie en poids de vanadium, provenant du sel de vanadium et
e) 0,1 à 0,8 partie en poids et de manière encore plus préférée de 0,2 à 0,6 parties en poids d'amine tertiaire,
au vu de la somme du monomère (méth) acrylique et du polymère (méth)acrylique, les deux ensemble représentant 100 parties en poids.

11. Procédé de fabrication de pièces ou d'articles mécaniques structurés, **caractérisé en ce qu'**il comprend les étapes suivantes :
a) l'imprégnation d'un substrat fibreux avec un sirop (méth)acrylique liquide visqueux selon l'une des revendications 1 à 6,
b)la polymérisation dudit sirop (méth)acrylique liquide visqueux imprégnant ledit substrat fibreux.

12. Procédé selon la revendication 11, **caractérisé en ce que** l'imprégnation du substrat fibreux à l'étape a) est réalisée dans un moule fermé.

13. Procédé selon l'une quelconque des revendications 11 à 12, **caractérisé en ce que** l'étape a) d'imprégnation d'un substrat fibreux et l'étape b) de polymérisation sont réalisées dans un moule fermé.

14. Pièce mécanique ou structurelle tridimensionnelle obtenue par le procédé de fabrication selon l'une des revendications 11 à 13.

15. Pièce selon la revendication 14, qui est une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante ou de photocopieuse.

## Patentansprüche

1. Viskoser flüssiger (Meth)acrylsirup, dessen dynamische Viskosität in einem Bereich von 10 mPa*s bis 10.000 mPa*s bei 25 °C liegt, umfassend:
a) 10 bis 60 Gewichtsteile eines (Meth)acrylPolymers,
b) 40 bis 90 Gewichtsteile eines monofunktionellen (Meth)acryl-Monomers,
c) 0,1 bis 3 Gewichtsteile eines Initiators zum Starten der Polymerisation des (Meth)acryl-Monomers, wobei der Initiator in Form einer in einem Temperaturbereich zwischen 0 und 50 °C flüssigen Peroxidverbindung vorliegt,
wobei der Sirup **dadurch gekennzeichnet ist, dass** der Initiator mit einem Beschleunigungssystem kombiniert ist, das Folgendes umfasst:
d) weniger als 1 Gewichtsteil Vanadium, das aus einem Vanadiumsalz stammt, und
e) 0,05 bis 1 Gewichtsteil eines tertiären Amins, bezogen auf die Summe des (Meth)acryl-Monomers und des (Meth)acryl-Polymers, wobei die beiden zusammen 100 Gewichtsteile ausmachen.

2. (Meth)acrylsirup nach Anspruch 1, **dadurch gekennzeichnet, dass** es sich bei dem Vanadiumsalz d) um ein Salz handelt, das Phosphorliganden, wie Dialkylphosphate oder Trialkylphosphate, vorzugsweise Dialkylphosphate mit Alkylketten mit zwischen 2 und 20 Kohlenstoffatomen, umfasst.

3. (Meth)acrylsirup nach Anspruch 1, **dadurch gekennzeichnet, dass** das tertiäre Amin e) aus N,N-Dimethyl-p-toluidin (DMPT), N,N-Dihydroxyethyl-p-toluidin (DHEPT), N,N-Diethyl-p-toluidin (DEPT) und para-Toluidinethoxylat (PTE) ausgewählt ist.

4. (Meth)acrylsirup nach einem der Ansprüche 1 bis 3, **dadurch gekennzeichnet, dass** es sich bei der flüssigen Peroxidverbindung c) um ein organisches Peroxid mit 2 bis 30 Kohlenstoffatomen handelt, das aus Hydroperoxiden, Ketonperoxiden oder Peroxyestern ausgewählt ist, und es sich bei dem flüssigen Peroxid vorzugsweise um ein aus tert-Butylhydroperoxid, Monohydroperoxid, Paramethanhydroperoxid, tert-Amylhydroperoxid oder Cumolhydroperoxid ausgewähltes Hydroperoxid handelt.

5. (Meth)acrylsirup nach einem der Ansprüche 1 bis 4, **dadurch gekennzeichnet, dass** er Folgendes umfasst:
a) 10 bis 60 Gewichtsteile (Meth)acryl-Polymer,
b) 40 bis 90 Gewichtsteile monofunktionelles (Meth)acryl-Monomer,
c) 0,1 bis 1 Gewichtsteil eines Initiators,
d) weniger als 0,5 Gewichtsteile, weiter bevorzugt weniger als 0,2 Gewichtsteile und noch weiter bevorzugt zwischen 0,0005 und 0,1 Gewichtsteile Vanadium, das aus einem Vanadiumsalz stammt, und
e) 0,1 bis 0,8 Gewichtsteile und noch weiter bevorzugt 0,2 bis 0,6 Gewichtsteile eines tertiären Amins,
bezogen auf die Summe des (Meth)acryl-Monomers und des (Meth)acryl-Polymers, wobei die beiden zusammen 100 Gewichtsteile ausmachen.

6. (Meth)acrylsirup nach einem der vorhergehenden Ansprüche, **dadurch gekennzeichnet, dass** er eine dynamische Viskosität mit einem Wert im Bereich von 10 mPa*s bis 10.000 mPa*s, vorzugsweise 50 mPa*s bis 5000 mPa*s, vorteilhafterweise 100 mPa*s bis 1000 mPa*s und noch vorteilhafter 100 mPa*s bis 500 mPa*s aufweist.

7. Verwendung des (Meth)acrylsirups nach einem der Ansprüche 1 bis 6 zum Imprägnieren eines Fasersubstrats, wobei das Fasersubstrat aus langen Fasern besteht, dessen Fasern ein Längenverhältnis von mindestens 1000 aufweisen.

8. Verfahren zum Polymerisieren eines viskosen flüssigen (Meth)acrylsirups nach einem der Ansprüche 1 bis 6, wobei es sich bei dem Sirup um ein Zweikomponentensystem handelt, das eine erste Komponente, die sich aus dem Mischen der Verbindungen a), b), d) und e) ergibt, und eine zweite Komponente, die die Initiatorverbindung c) umfasst, umfasst, wobei das Verfahren darin besteht, dass man die erste Komponente und die zweite Komponente des Zweikomponentensystems weniger als 10 Minuten vor dem Einspritzen in eine Form oder dem Imprägnieren eines Fasersubstrats mischt.

9. Imprägnierungsverfahren zum Imprägnieren eines Fasersubstrats, wobei das Fasersubstrat aus langen Fasern besteht, wobei das Verfahren **dadurch gekennzeichnet ist, dass** es einen Schritt des Imprägnierens des Fasersubstrats mit einem viskosen flüssigen (Meth)acrylsirup, umfassend:
a) 10 bis 60 Gewichtsteile eines (Meth)acrylPolymers,
b) 40 bis 90 Gewichtsteile eines monofunktionellen (Meth)acryl-Monomers,
c) 0,1 bis 3 Gewichtsteile eines Initiators zum Starten der Polymerisation des (Meth)acryl-Monomers, wobei der Initiator in Form einer in einem Temperaturbereich zwischen 0 und 50 °C flüssigen Peroxidverbindung vorliegt,
wobei der Initiator mit einem Beschleunigungssystem kombiniert ist, das Folgendes umfasst:
d) weniger als 1 Gewichtsteil Vanadium, das aus einem Vanadiumsalz stammt, und
e) 0,05 bis 1 Gewichtsteil eines tertiären Amins, bezogen auf die Summe des (Meth)acryl-Monomers und des (Meth)acryl-Polymers, wobei die beiden zusammen 100 Gewichtsteile ausmachen, umfasst.

10. Imprägnierverfahren nach Anspruch 9, **dadurch gekennzeichnet, dass** der viskose flüssige (Meth)-acrylsirup Folgendes umfasst:
a) 10 bis 60 Gewichtsteile (Meth)acryl-Polymer,
b) 40 bis 90 Gewichtsteile monofunktionelles (Meth)acryl-Monomer,
c) 0,1 bis 1 Gewichtsteil eines Initiators,
d) weniger als 0,5 Gewichtsteile, weiter bevorzugt weniger als 0,2 Gewichtsteile und noch weiter bevorzugt zwischen 0,0005 und 0,1 Gewichtsteile Vanadium, das aus einem Vanadiumsalz stammt, und
e) 0,1 bis 0,8 Gewichtsteile und noch weiter bevorzugt 0,2 bis 0,6 Gewichtsteile eines tertiären Amins,
bezogen auf die Summe des (Meth)acryl-Monomers und des (Meth)acryl-Polymers, wobei die beiden zusammen 100 Gewichtsteile ausmachen.

11. Verfahren zur Herstellung von strukturierten mechanischen Teilen oder Artikeln, **dadurch gekennzeichnet, dass** es die folgenden Schritte umfasst:
a) Imprägnieren eines Fasersubstrats mit einem viskosen flüssigen (Meth)acrylsirup nach einem der Ansprüche 1 bis 6,
b) Polymerisieren des das Fasersubstrat imprägnierenden viskosen flüssigen (Meth)acrylsirups.

12. Verfahren nach Anspruch 11, **dadurch gekennzeichnet, dass** die Imprägnierung des Fasersubstrats in Schritt a) in einer geschlossenen Form durchgeführt wird.

13. Verfahren nach einem der Ansprüche 11 bis 12, **dadurch gekennzeichnet, dass** der Schritt a) des Imprägnierens eines Fasersubstrats und der Schritt b) des Polymerisierens in einer geschlossenen Form durchgeführt werden.

14. Dreidimensionales mechanisches Teil oder Bauteil, erhalten durch das Herstellungsverfahren nach einem der Ansprüche 11 bis 13.

15. Teil nach Anspruch 14, wobei es sich bei dem Teil um ein Automobilteil, ein Bootsteil, ein Zugteil, einen Sportartikel, ein Flugzeug- oder Hubschrauberteil, ein Raumschiff- oder Raketenteil, ein Photovoltaikmodulteil, ein Windturbinenteil, ein Möbelteil, ein Konstruktions- oder Gebäudeteil, ein Telefon- oder Mobiltelefonteil, ein Computer- oder Fernseherteil, ein Drucker- oder Fotokopiererteil handelt.

## Claims

1. Viscous liquid (meth)acrylic syrup, whose dynamic viscosity is within a range from 10 mPa.s to 10 000 mPa.s at 25°C, comprising:
a) 10 to 60 parts by weight of a (meth) acrylic polymer,
b) 40 to 90 parts by weight of a monofunctional (meth)acrylic monomer,
c) 0.1 to 3 parts by weight of an initiator to start the polymerization of the (meth)acrylic monomer, said initiator being in the form of a peroxide compound that is liquid in a temperature range of between 0° and 50°C,
said syrup being **characterized in that** the initiator is combined with an accelerating system comprising:
d) less than 1 part by weight of vanadium, originating from a vanadium salt and
e) 0.05 to 1 part by weight of a tertiary amine,
relative to the sum of the (meth)acrylic monomer and the (meth)acrylic polymer, the two together representing 100 parts by weight.

2. (Meth)acrylic syrup according to Claim 1, **characterized in that** the vanadium salt d) is a salt comprising phosphorus ligands, such as dialkyl phosphates or trialkyl phosphates, preferentially dialkyl phosphates with alkyl chains comprising between 2 and 20 carbon atoms.

3. (Meth)acrylic syrup according to Claim 1, **characterized in that** the tertiary amine e) is chosen from N,N-dimethyl-p-toluidine (DMPT), N,N-dihydroxyethyl-p-toluidine (DHEPT), N,N-diethyl-p-toluidine (DEPT) and para-toluidine ethoxylate (PTE) .

4. (Meth)acrylic syrup according to any one of Claims 1 to 3, **characterized in that** the liquid peroxide compound c) is an organic peroxide comprising 2 to 30 carbon atoms, chosen from hydroperoxides, ketone peroxides and peroxyesters, and preferably the liquid peroxide is a hydroperoxide chosen from tert-butyl hydroperoxide, monohydroperoxide, para-methane hydroperoxide, tert-amyl hydroperoxide and cumene hydroperoxide.

5. (Meth)acrylic syrup according to one of Claims 1 to 4, **characterized in that** it comprises:
a) 10 to 60 parts by weight of (meth)acrylic polymer,
b) 40 to 90 parts by weight of monofunctional (meth)acrylic monomer,
c) 0.1 to 1 part by weight of initiator,
d) less than 0.5 part by weight, more preferably less than 0.2 part by weight and even more preferably between 0.0005 and 0.1 part by weight of vanadium, originating from the vanadium salt and
e) 0.1 to 0.8 part by weight and even more preferably from 0.2 to 0.6 part by weight of tertiary amine,
relative to the sum of the (meth)acrylic monomer and of the (meth)acrylic polymer, the two together representing 100 parts by weight.

6. (Meth) acrylic syrup according to any one of the preceding claims, **characterized in that** it has a dynamic viscosity with a value within the range from 10 mPa.s to 10 000 mPa.s, preferably from 50 mPa.s to 5000 mPa.s, advantageously from 100 mPa.s to 1000 mPa.s and more advantageously from 100 mPa.s to 500 mPa.s.

7. Use of the (meth) acrylic syrup according to one of Claims 1 to 6, for the impregnation of a fibrous substrate, said fibrous substrate consisting of long fibers, the fibers of which have a length ratio of at least 1000.

8. Process for polymerizing a viscous liquid (meth)acrylic syrup according to any one of Claims 1 to 6, said syrup being a two-component system comprising a first component resulting from a mixing of compounds a), b), d) and e) and a second component comprising the initiating compound c), said process consisting in mixing the first and second component of the two-component system less than 10 minutes before injection into a mold or impregnation of a fibrous substrate.

9. Impregnation process for impregnating a fibrous substrate, said fibrous substrate consisting of long fibers, said process being **characterized in that** it comprises a step of impregnating said fibrous substrate with a viscous liquid (meth)acrylic syrup comprising:
a) 10 to 60 parts by weight of a (meth) acrylic polymer,
b) 40 to 90 parts by weight of a monofunctional (meth)acrylic monomer,
c) 0.1 to 3 parts by weight of an initiator to start the polymerization of the (meth)acrylic monomer, said initiator being in the form of a peroxide compound that is liquid in a temperature range of between 0° and 50°C,
the initiator being combined with an accelerating system comprising:
d) less than 1 part by weight of vanadium, originating from a vanadium salt and
e) 0.05 to 1 part by weight of a tertiary amine, relative to the sum of the (meth)acrylic monomer and of the (meth)acrylic polymer, the two together representing 100 parts by weight.

10. Impregnation process according to Claim 9, **characterized in that** the viscous liquid (meth)acrylic syrup comprises:
a) 10 to 60 parts by weight of (meth)acrylic polymer,
b) 40 to 90 parts by weight of monofunctional (meth)acrylic monomer,
c) 0.1 to 1 part by weight of initiator,
d) less than 0.5 part by weight, more preferably less than 0.2 part by weight and even more preferably between 0.0005 and 0.1 part by weight of vanadium, originating from the vanadium salt and
e) 0.1 to 0.8 part by weight and even more preferably from 0.2 to 0.6 part by weight of tertiary amine,
relative to the sum of the (meth)acrylic monomer and of the (meth)acrylic polymer, the two together representing 100 parts by weight.

11. Process for manufacturing structured mechanical parts or articles, **characterized in that** it comprises the following steps:
a) impregnating a fibrous substrate with a viscous liquid (meth)acrylic syrup according to one of Claims 1 to 6,
b) polymerizing said viscous liquid (meth)acrylic syrup impregnating said fibrous substrate.

12. Process according to Claim 11, **characterized in that** the impregnation of the fibrous substrate in step a) is performed in a closed mold.

13. Process according to either of Claims 11 and 12, **characterized in that** step a) of impregnating a fibrous substrate and step b) of polymerization are performed in a closed mold.

14. Three-dimensional mechanical or structural part obtained via the manufacturing process according to one of Claims 11 to 13.

15. Part according to Claim 14, which is a motor vehicle part, boat part, train part, sport article, plane or helicopter part, space ship or rocket part, photovoltaic module part, wind turbine part, furniture part, construction or building part, telephone or cellphone part, computer or television part, printer or photocopier part.
